# EUROPÄISCHE PATENTSCHRIFT

(11) **EP 0 710 548 B1**
(45) Veröffentlichungstag und Bekanntmachung des Hinweises auf die Patenterteilung: **23.08.2000**
(21) Anmeldenummer: 95116874.9
(22) Anmeldetag: 26.10.1995
(51) Int. Cl.: B32B 31/20, B32B 27/30

(54) **Verfahren zum thermischen Verkleben von Teilen aus Acrylkunststoff und Teilen aus technischen Kunststoffen**
Method for thermal welding of parts of acrylic polymer with parts of engineering plastics
Procédé pour le soudage thermique de parties en polymère acrylique et parties en matières plastiques industrielles

(30) Priorität: 04.11.1994 DE 4439420
(43) Veröffentlichungstag der Anmeldung: 08.05.1996
(73) Patentinhaber: Röhm GmbH, 64293 Darmstadt (DE)
(72) Erfinder: Theil, Alexander, D-64354 Reinheim (DE); Fehring, Karl-Heinz, D-64589 Stockstadt/RH (DE); Emmerich, Friedel, D-64342 Seeheim-Jugenheim (DE)

(56) Entgegenhaltungen:
- DE-A- 2 058 585
- FR-A- 1 473 254
- US-A- 3 810 815
- US-A- 4 021 287
- US-A- 4 838 974
- US-A- 5 069 851

## Beschreibung

### Gebiet der Erfindung

Die Erfindung betrifft Verfahren zum thermischen Verkleben von Teilen aus Acrylkunststoff mit Teilen aus technischen Kunststoffen oder von Teilen aus Acrylkunststoffen beziehungsweise technischen Kunststoffen untereinander sowie mit diesem Verfahren hergestellte Verbunde.

### Stand der Technik

Verfahren zur Herstellung von Verbunden aus Teilen aus Acrylkunststoff, insbesondere aus Polymethylmethacrylat mit Teilen aus technischen Kunststoffen, wie beispielsweise Polycarbonate, Polyester, Polyether, Polyamide, Polyketone, Polysulfone oder deren Mischpolymerisate, beziehungsweise Verfahren zur Herstellung von Verbunden aus Teilen aus technischen Kunststoffen untereinander, sind bekannt. So können solche Verbunde beispielsweise mit Hilfe von Klebstoffen hergestellt werden, wobei deren Auswahl auf den chemischen Aufbau der jeweiligen Kunststoffe abgestimmt werden muß (zu Klebstoffen vgl. beispielsweise Kirk-Othmer, Encyclopedia of Chemical Technology, 3rd. Ed., Vol. 1, Seiten 488 bis 510, J. Wiley, New York, 1978). Im allgemeinen werden die Klebeverfahren in Verklebungen mit Lösemitteln, mit Klebelacken sowie mit Polymerisationsklebstoffen unterschieden. Verfahren mit Lösemitteln und Klebelacken arbeiten insbesondere mit halogenierten Lösemitteln wegen deren günstigeren Anlöseeigenschaften für verschiedene Kunststoffe. Solche halogenierten Kohlenwasserstoffe bergen gesundheitliche und umweltrelevante Risiken. Weiterhin kann es bei Klebeverfahren, die mit Lösemitteln arbeiten, zur Rißbildung in den Kunststoffteilen kommen, insbesondere bei der Verklebung von Spritzguß- oder Extrusionsteilen, die in der Regel Eigenspannungen aufweisen.
Die Polymerisationsklebstoffe zum Verkleben von Kunststoffteilen enthalten im allgemeinen die Monomerbausteine der jeweiligen Kunststoffe, gewisse Anteile an Polymerisat aufgebaut aus solchen Monomerbausteinen sowie zur Beschleunigung des Klebvorgangs Polymerisationsinitiatoren, wie beispielsweise Peroxide, Lichtinitiatoren oder Redoxinitiatoren. Auch bei diesen Verfahren kann, durch die als Lösemittel wirkenden monomeren Bestandteile bedingt, Spannungsrißkorrosion in den Kunststoffteilen auftreten. Die Härtungszeiten bei Polymerisationsklebstoffen liegen im allgemeinen zwischen 1 und 3 Stunden, was ebenfalls für einige Anwendungen von Nachteil ist, insbesondere bei Serienfertigungen.
Weiterhin können Verbunde aus Kunststoffen durch thermisches Verschweißen hergestellt werden, das bei Temperaturen oberhalb der Erweichungstemperatur des jeweiligen Kunststoffs und im allgemeinen unter Anwendung von Druck erfolgt (vgl. hierzu beispielsweise Vieweg-Esser, Kunststoff-Handbuch, Bd. IX, Polymethacrylate, Carl Hanser, München, 1975).
Bei den beschriebenen Verfahren zum thermischen Verschweißen müssen lokale Überhitzungen an den Schweißstellen, die zur Zersetzung der Kunststoffe und damit zur Abspaltung von gasförmigen, monomeren Bestandteilen führen, sorgfältig vermieden werden. Daher werden flächige Verbunde aus Kunststoffen bisher vorwiegend durch Verkleben hergestellt.
Eine weitere Möglichkeit zur Herstellung von flächigen Kunststoffverbunden ist das thermische Verschweißen in Gegenwart einer Zwischenschicht, die beim Erwärmen mit den zu verbindenden Kunststoffteilen an beiden Seiten gut haftet. So werden beispielsweise in EP-A 584 593 Kunststoffverbunde beschrieben, bei denen mindestens eine Verbindung zwischen zwei Polymethylmethacrylat-Kunststoffschichten durch thermisches Verschweißen in Gegenwart einer zwischen 0,01 und einigen mm dicken Zwischenschicht eines im wesentlichen aus Methylmethacrylat aufgebauten Polymeren hergestellt wird. Vorzugsweise ist die Zwischenschicht eine dünne Folie oder Platte aus Polymethylmethacrylat. Auch bei diesem Verfahren treten mitunter Einschlüsse von Luft oder monomeren Zersetzungsprodukten im Verbund auf, wenn die vorgeschriebene Temperaturführung nicht eingehalten wird.
Das wohl gebräuchlichste Verfahren zur Herstellung von flächigen Kunststoffverbunden aus verschiedenen Kunststoffen ist die Coextrusion. Die Technik der Coextrusion verschiedener Kunststoffe, die in getrennten Extrudern aufgeschmolzen und in einer gemeinsamen Coextrusionsdüse zu einem mehrschichtigen Kunststoffverbund zusammengeführt werden, ist an sich bekannt. In EP-A 65 619 (= US-A 4,477,521) werden Kunststoffverbunde beschrieben, bestehend aus Kernschichten, aufgebaut aus Polycarbonat, Polystyrol, Polyvinylchlorid, Polyethylen oder Styrol-Butadien-Mischpolymerisaten, sowie aus Deckschichten, aufgebaut aus Homo- oder Mischpolymerisaten des Methylmethacrylats. Unabdingbare Voraussetzung für das Coextrusionsverfahren ist, daß alle Schichten aus thermoplastischen, extrudierbaren Kunststoffen bestehen müssen. Wie in EP-A 65 619 dargestellt, muß die Dicke der einzelnen Schichten des Kunststoffverbunds permanent kontrolliert werden und bei starken Normabweichungen neu justiert werden. Dies stellt neben der schon an sich komplexen Coextrusionstechnologie einen weiteren aufwendigen Verfahrensschritt dar.

### Aufgabe und Lösung

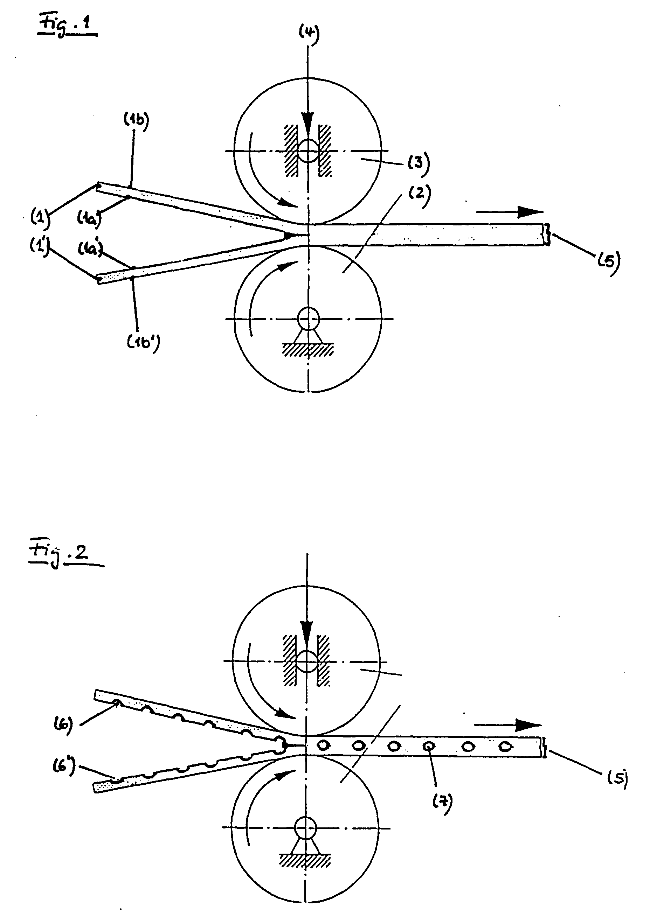

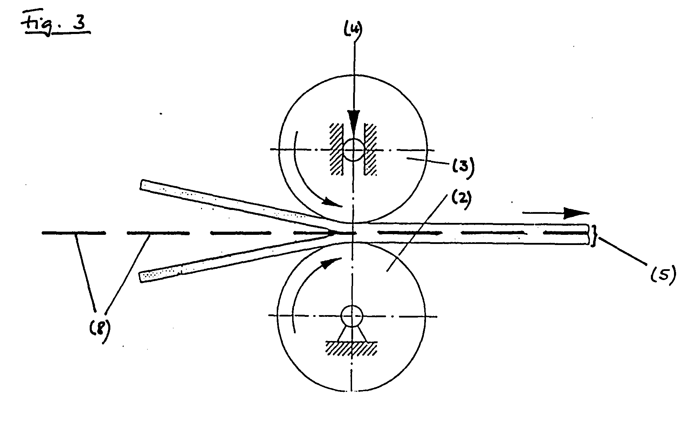

Aufgabe war es also, das seit langem bestehende Bedürfnis nach einem technisch einfachen Verfahren zur Herstellung von flächigen Kunststoffverbunden zu befriedigen, bei denen die Verbindungsnähte möglichst wenig sichtbar sein und die Verbindung ohne Hilfsmittel, wie Klebstoffe oder Folien, bewerkstelligt werden kann, und bei dem Verbindungsflächen ohne optische Inhomogenitäten, wie beispielsweise Schlieren oder Gasinklusionen, erreichbar sind.
Überraschenderweise wurde gefunden, daß optisch einwandfreie Verbunde von mindestens zwei Kunststoffteilen ohne weitere Hilfsmittel mit folgendem Verfahren erreicht werden können:
Die Kunststoffteile (Fig. 1, 1 und 1') werden an ihrer zum Verkleben oder zum Fügen vorgesehenen Oberfläche (1a, 1a') auf Temperaturen vorerwärmt, die 10 bis 100 K, vorzugsweise 20 bis 75 K oberhalb der Vicat-Erweichungstemperaturen VET (nach DIN ISO 306) der jeweils die Kunststoffteile (1, 1') aufbauenden Kunststoffe A und B liegen, mit der Maßgabe, daß die Kunststoffteile (1, 1') selbst dimensionsstabil bleiben, und zwischen einem Walzenpaar (2, 3), bei dem mindestens eine Walze (3), über die die Preßkraft ausgeübt werden kann, beweglich gelagert ist unter kontinuierlichem Vorschub mit einer Preßkraft (4) zwischen 10 und 500 N verpreßt, wobei die Vorschubgeschwindigkeit zwischen 5 und 200 mm/s liegt. Vorzugsweise ist der Kunststoff A ein Polymerisat des Methylmethacrylats und der Kunststoff B ein Polymerisat, ausgewählt aus der Gruppe Polycarbonate, Polyester, Polyether, Polyamide oder deren Mischpolymerisate.
In einer weiteren bevorzugten Ausführungsform der Erfindung sind der das Kunststoffteil (1) aufbauende Kunststoff A und der das Kunststoffteil (1') aufbauende Kunststoff B identisch.
Bevorzugt sind die Kunststoffteile (1, 1') Platten oder Folien mit Dicken zwischen 0,5 und 100 mm, besonders bevorzugt mit Dicken zwischen 1 und 50 mm.
In weiteren bevorzugten Ausführungsformen der Erfindung werden zwischen die Klebeflächen (1a, 1a') der Kunststoffteile (1, 1') beim Verpressen flächige Gegenstände (Fig. 2, 8), wie beispielsweise Bilder oder Farbfolien, oder längliche Gegenstände (8), wie beispielsweise Fäden, Drähte, Stahlspiralen oder dünne Bahnen anderer, von A und B verschiedener, Kunststoffe eingelagert. Bedingung hierfür ist, daß die Dicke solcher Gegenstände maximal 50 %, vorzugsweise maximal 25 % der Dicke der Kunststoffteile (1, 1') beträgt.
Weiterhin bevorzugt sind die Kunststoffteile (1, 1') Platten, die Gravuren oder Einprägungen (Fig. 2, 6) von wenigstens 0,2 mm, bevorzugt von wenigstens 1 mm Tiefe aufweisen und die solchermaßen verpreßt werden, daß die Einprägungen (6) zu den Klebeflächen (1a, 1a') hin zeigen. Damit lassen sich Verbunde (5) mit dreidimensionalen Einschlüssen (7) definierter Gestalt herstellen.
Die für das Verkleben notwendigen Oberflächentemperaturen an den Klebeseiten (1a, 1a') der Kunststoffteile (1, 1') können mit indirekten physikalischen Methoden, wie beispielsweise Hochfrequenz- oder Ultraschallfelder, oder vorzugsweise durch direkte Bestrahlung, beispielsweise mit Warmluftgebläsen oder Infrarot-Strahlern, erzeugt werden.
Im allgemeinen beträgt die Differenz zwischen Oberflächen- und Kerntemperaturen der Kunststoffteile (1, 1') zwischen 20 und 150 K, bevorzugt zwischen 30 und 120 K, wobei die Kerntemperaturen der Kunststoffteile immer mindestens 10 K unterhalb der Erweichungstemperaturen VET der Kunststoffe A und B bleiben.

### Durchführung der Erfindung

Die die Kunststoffteile 1 aufbauenden Kunststoffe A sind vorzugsweise Polymerisate des Methylmethacrylats, die bis zu 50 Gew.-% aus anderen, mit Methylmethacrylat copolymerisierbaren Monomeren, aufgebaut sein können.
Besonders bevorzugt beträgt der Anteil des Methylmethacrylats 80 bis 100 Gew.-%. Als Comonomere kommen in erster Linie Alkylacrylate mit 1 bis 6 Kohlenstoffatomen im Alkylesterrest, Acryl- und/oder Methacrylnitril, Styrol und/oder substituierte Styrole sowie Maleinsäureanhydrid in Betracht. Zur Verwendung kommen im allgemeinen thermoplastisch oder thermoelastisch verformbare Polymethacrylat-Kunststoffe obiger Zusammensetzung mit spezifischen Viskositäten nach DIN 51562 in Chloroform bei 25 Grad C im Bereich zwischen 290 und 1500 ml/g, entsprechend ungefähren mittleren Molekulargewichten M_{W} zwischen 3 x 10⁴ und ca. 5 x 10⁶ Dalton.
Darüber hinaus können in einer weiteren bevorzugten Ausführungsform der Erfindung die die Kunststoffteile 1 aufbauenden Kunststoffe A mit den im folgenden genannten Kunststoffen B, die die Kunststoffteile 1' aufbauen, identisch sein und damit ebenfalls aus der im folgenden genannten Gruppe Polycarbonate, Polyester, Polyether, Polyamide, Polyketone, Polysulfone oder Mischpolymerisate ausgewählt sein.

Die Kunststoffteile 1' aufbauenden Kunststoffe B zählen zu der Kategorie "Technische Kunststoffe" und sind ausgewählt aus der Gruppe Polycarbonate, Polyester, Polyether, Polyamide, Polyketone, Polysulfone oder deren Mischpolymerisate.
Die verwendeten Polyester sind im allgemeinen thermoplastische Polyalkylenterephthalate, wie beispielsweise Polyethylenterephthalat oder Polybutylenterephthalat, mit mittleren Molekulargewichten M_{W} zwischen 5 x 10³ und 2 x 10⁵ Dalton (zu Polyestern siehe beispielsweise Kirk-Othmer, Encyclopedia of Chemical Technology, 3rd. Ed. Vol. 18, Seiten 549 bis 574, J. Wiley, New York, 1982).
Als Polyamide für den Kunststoff B werden im allgemeinen amorphe Polyamide des Nylon-Typs verwendet, wie z.B. Copolyamide oder Polyamide mit verzweigten Alkylengruppen in der Polymerkette (zu Polyamiden vgl. beispielsweise Kirk-Othmer, loc.cit., Vol. 18, Seiten 328 bis 371).
Weiterhin können die Kunststoffe B aus der Gruppe amorpher aromatischer Polyether, die Polyketone und Polysulfone einschließen, ausgewählt sein. Beispielhaft für aromatische Polyether seien genannt: Polyphenylenoxide, Polyethersulfone, Polyetherketone oder Polyetherimide (zu aromatischen Polyethern vgl. beispielsweise Kirk-Othmer, loc.cit., Vol. 18, Seiten 594 bis 615).
Bevorzugt sind als Kunststoffe B Polycarbonate, wie beispielsweise Tetramethylbisphenol-A-Polycarbonat, Copolycarbonate aus Bisphenol-A- und Terephthalsäure-Einheiten sowie insbesondere Bisphenol-A-Polycarbonate (zu Polycarbonaten vgl. beispielsweise Kirk-Othmer, loc.cit., Vol. 18, Seiten 479 bis 494).
Weiterhin bevorzugt sind mit den die Kunststoffteile 1 aufbauenden Kunststoffen A identische Kunststoffe B. Besonders bevorzugt sind sowohl für A als auch für B identische Polymerisate des Methylmethacrylats, wie oben beschrieben. Desweiteren besonders bevorzugt sind sowohl für Kunststoff A als auch für Kunststoff B identische Bisphenol-A-Polycarbonate.
Die Kunststoffe A und B können in Anteilen von 10⁻³ bis 20 Gew.-%, bezogen auf A bzw. auf B, übliche Kunststoffadditive, wie beispielsweise Lichstschutzmittel, Stabilisatoren gegen thermische Zersetzung, Gleitmittel, Füllstoffe sowie insbesondere Farbstoffe oder Pigmente enthalten.
Die Kunststoffteile (1) und (1') sind vorzugsweise Platten oder Folien, die großflächige Verklebungen ermöglichen, für welche das erfindungsgemäße Verfahren bevorzugt geeignet ist. Die Platten oder Folien weisen bevorzugt Dicken zwischen 0,5 und 100 mm, besonders bevorzugt zwischen 1 und 50 mm auf. Die Fläche der Platten kann beispielsweise zwischen 0,01 und 5 m² liegen, mit Plattenbreiten zwischen 0,1 und 2 m und Plattenlängen zwischen 0,1 und 5 m. Mit Folien können praktisch beliebig lange Verbunde mit Breiten von beispielsweise 0,1 bis 2 m hergestellt werden.

In Fig. 1 ist die erfindungsgemäße Vorrichtung zur Herstellung von Verbunden aus den Kunststoffen (1) und (1') beispielhaft in einer Prinzipskizze dargestellt. Die an der Oberfläche der Klebeseiten (1a) und (1a') auf Temperaturen zwischen 10 und 100 K, vorzugsweise zwischen 20 und 75 K oberhalb der Vicat-Erweichungstemperaturen VET (gemessen nach DIN ISO 306) der jeweiligen Kunststoffe A und B erhitzten Kunststoffteile (1) und (1') werden durch ein gegensinnig drehendes Walzenpaar geführt, wobei die untere Walze (2) fest gelagert ist und wobei die beweglich gelagerte obere Walze (3) mit einer Preßkraft (4) von 10 bis 500 N beaufschlagt werden kann. Die Vorschubgeschwindigkeit, mit der die Kunststoffteile (1) und (1') verpreßt werden, wird beispielsweise über die Drehgeschwindigkeit der Walzen (2) und (3) festgelegt und beträgt zwischen 5 und 200 mm/s, vorzugsweise zwischen 10 und 150 mm/s. Die beispielsweise aus Edelstahl bestehenden Walzen (2) und (3) sind im allgemeinen oberflächenpoliert oder mit einer elastischen Oberflächenbeschichtung, beispielsweise einer Weichgummischicht mit niedriger Shore-Härte (vgl. hierzu EP-A 201044) versehen, um keine Beschädigungen an den Oberflächenseiten (1b) und (1b') der Kunststoffteile (1) und (1') und später der Verbunde (5) zu erzeugen. In Spezialfällen können die Oberflächen der Walzen (2) und (3) strukturiert sein, wobei hierzu die Oberflächen (1b) und (1b') der Kunststoffteile (1) und (1') vorzugsweise auf Temperaturen zwischen 10 und 30 K über der Vicat-Erweichungstemperatur VET der jeweiligen Kunststoffe A und B erhitzt werden.
Die Oberfläche der Klebeseiten (1a) und (1a') der Kunststoffteile (1) und (1') werden solchermaßen erwärmt, daß die Kunststoffteile selbst dimensionsstabil bleiben. Für die Erwärmung der Klebeseiten (1a) und (1a') können beispielsweise indirekte physikalische Methoden, wie z.B. elektromagnetische Hochfrequenzfelder oder Ultraschallfelder, angewendet werden. Vorzugsweise kommen direkte Methoden zur Wärmebestrahlung zur Anwendung, wie beispielsweise Warmluftgebläse oder Infrarotstrahler. Im allgemeinen werden die Kunststoffteile (1) und (2) im Ofen zur Vermeidung von thermischen Spannungen vor der Wärmebestrahlung solchermaßen vorerwärmt, daß die Differenz zwischen Oberflächen- und Kerntemperaturen der Kunststoffteile (1, 1') zwischen 20 und 150 K, bevorzugt zwischen 30 und 120 K beträgt, wobei die Kerntemperaturen der Kunststoffteile immer mindestens 10 K unterhalb der Erweichungstemperaturen VET der Kunststoffe A und B bleiben.

Die Preßkraft (4), die mit der oberen Walze (3) auf die Kunststoffteile (1, 1') und den sich bildenden Verbund (5) der Kunststoffteile (1, 1') ausgeübt wird, kann beispielsweise mit einfachen Hebelapparaturen oder hydraulisch erzeugt werden. Im allgemeinen ist die Preßkraft (4) während des gesamten Verpreßvorgangs konstant, wobei Preßkräfte zwischen 10 und 500 N, bevorzugt zwischen 25 und 400 N angewendet werden.
In einer weiteren Ausführungsform der Erfindung können Verbunde (5) aus Kunststoffteilen (1, 1') mit flächigen Rändern, wie beispielsweise Kuppeln, Tonnengewölben oder Schalen, hergestellt werden, indem die Ränder selektiv erhitzt werden und nach dem erfindungsgemäßen Verfahren zusammengefügt werden.
Die Kunststoffteile (1, 1'), insbesondere Platten oder Folien, können Gravuren oder Einprägungen (Fig. 2, 6, 6') besitzen, die Tiefen von mindestens 0,2 mm, vorzugsweise von mindestens 1 mm aufweisen, die sich entweder an den Außenseiten (1b, 1b') oder vorzugsweise an den Klebeseiten (1a, 1a') der Kunststoffteile (1, 1') befinden. Liegen die Gravuren oder Einprägungen an den Klebeseiten (1a, 1a'), so lassen sich dreidimensionale Einschlüsse (7) definierter Gestalt im Verbund (5) erzeugen (Fig. 2).
Bevorzugt werden solche dreidimensionalen Einschlüsse (7) durch das Verkleben von zwei Platten (1, 1') erzeugt, bei denen jede Platte Gravuren oder Einprägungen (6, 6') auf den Klebeseiten (1a, 1a') aufweist, die spiegelbildlich zusammengefügt werden. Bedingung für die Herstellung solcher dreidimensionaler Einschlüsse (7) ist, daß die Gravuren oder Einprägungen (6, 6') beim Erwärmen der Oberflächen der Klebeseiten (1a, 1a') auf die genannten Klebetemperaturen formstabil bleiben.

In weiteren Ausgestaltungen der Erfindung können flächige oder längliche Gegenstände (Fig. 3, 8) zwischen den Klebeseiten (1a, 1a') der Kunststoffteile (1, 1') eingelagert werden. Voraussetzung für die optisch einwandfreie Einlagerung solcher Gegenstände, d.h. beispielsweise die Vermeidung von Lufteinschlüssen oder von Schlierenbildung, ist, daß die Dicke der Gegenstände (8) maximal 50 %, vorzugsweise maximal 25 % der Dicke der Kunststoffteile (1, 1') ausmacht. Flächige Gegenstände (8), die zwischen den Klebeseiten (1a, 1a') der Kunststoffteile (1, 1') eingelagert werden können, sind beispielsweise Fotographien, Drucke, farbige Folien, Pigmentpapiere oder Folien aus thermoplastischen Elastomeren, wobei mit letzteren Sicherheitsglas-Verbunde erzeugt werden können. Bei erfindungsgemäßen Verfahren ist zu beachten, daß die eingelagerten Gegenstände (8) maximal 90 % der Fläche der Klebeseiten (1a, 1a') einnehmen dürfen. Längliche Gegenstände (8), die zwischen den Kunststoffteilen (1, 1') eingelagert werden können, sind beispielsweise schmale Kunststoffbahnen, die eingefärbt sein können, Drähte, Stahlspiralen, Stoffbänder, Papierstreifen oder bevorzugt Fäden, ganz besonders Kunststoff-Fäden mit hoher Elastizität und hohem Modul, wie beispielsweise Polyester- oder Nylonfäden, deren Einlagerung zu besonders schlagfesten Verbunden führt.

### Vorteile der Erfindung

Das erfindungsgemäße Verfahren ermöglicht eine großflächige Verklebung von Kunststoffteilen (1, 1') aus verschiedenen oder identischen Kunststoffen A und B, insbesondere von Platten oder Folien, ohne gleichzeitige Erzeugung von Gasinklusionen, die durch eingeschlossene Luft oder monomere Bestandteile als thermische Zersetzungsprodukte der Kunststoffe A und B entstehen können, mit einfachsten Mitteln. Bei der Aufsicht auf die solchermaßen gebildeten Verbunde (5) sind visuell weder eine Klebenaht noch andere optische Inhomogenitäten erkennbar.

Durch Verklebung von Kunststoffteilen (1, 1') mit Gravuren oder Einprägungen (6, 6') auf den Klebeseiten (1a, 1a') lassen sich dreidimensionale Einschlüsse (7) definierter Gestalt in den Verbunden (5) erzeugen (Fig. 2), was zu einer äußerst plastischen Wirkung solcher Verbundsysteme (5) führt. So lassen sich beispielsweise Figuren als Einschlüsse (7) darstellen, indem die spiegelbildlichen Halbformate in die Kunststoffteile (1, 1') eingeprägt werden und formschlüssig mit dem erfindungsgemäßen Verfahren zusammengeführt werden.
Weiterhin können flächige oder längliche Gegenstände (8), wie beispielsweise Bilder, Folien, Fäden, Drähte oder Stahlspiralen, zwischen den Klebeseiten (1a, 1a') der Kunststoffteile (1, 1') solchermaßen in die Verbunde (5) eingelagert werden, daß die Kunststoffe A und B die Gegenstände (8) vollständig umschließen (Fig. 3). Solche Verbundsysteme können vorteilhaft beispielsweise im Werbebereich (Leuchtdisplay, großflächige Werbung), als Verbundsysteme (mit Folien aus thermoplastischen Elastomeren) oder als splitterfeste Lärmschutzwände (mit eingelagerten Fäden aus elastischen Kunststoffen mit hohem Modul) eingesetzt werden.

Die folgenden Beispiele sollen die Erfindung erläutern.

### BEISPIELE

### Beispiel 1

### Herstellung eines Verbundes aus Polymethylmethacrylat-Platten mit eingelagertem Papierbild

2 Platten aus Polymethylmethacrylat (Plexiglas ® XT 20070: Molekulargewicht M_{W} ca. 155 000 Dalton) mit den Abmessungen 530 x 360 x 8 mm (Länge x Breite x Höhe) werden an jeweils einer Oberfläche (Klebeseite) auf eine Temperatur von 175 Grad C erwärmt, mit gegenüberliegenden, noch getrennten Klebeseiten vor den Walzen angeordnet und gemeinsam mit dem Papierbild zwischen den Klebeseiten zwischen die Walzen mit einer Vorschubgeschwindigkeit von 50 mm/s eingezogen, wobei die Walzen mit einer Kraft von 100 N zusammengepreßt werden.
Es resultiert ein Verbund mit eingelagertem unbeschädigtem Papierbild ohne Gasinklusionen, bei dem in der Aufsicht keine Klebenähte sichtbar sind.

### Beispiel 2

### Herstellung eines Verbunds aus Polymethylmethacrylat-Platten mit dreidimensionalen Einschlüssen.

Auf 2 Platten aus Polymethylmethacrylat (Plexiglas ® XT 20070: Molekulargewicht M_{W} ca. 155 000 Dalton) mit den Abmessungen 275 x 165 x 8 mm (Länge x Breite x Höhe) werden jeweils an einer Oberfläche (Klebeseite) nach den gängigen Verfahren des Standes der Technik mehrere Formen eingeprägt, wobei die Prägetiefe zwischen 0,2 und 10 mm liegt und die Prägeformen beim Aufeinanderlegen der Klebeseite formschlüssig zusammenfügbar sind.
Danach werden die Platten an ihrer Klebeseite auf eine Oberflächentemperatur von 175 Grad C erwärmt, mit gegenüberliegenden, noch getrennten Klebeseiten vor den Walzen angeordnet und mit einer Vorschubgeschwindigkeit von 50 mm/s zwischen die Walzen eingezogen, wobei die Walzen mit einer Kraft von 100 N zusammengepreßt werden.
Es resultiert ein Verbund mit eingelagerten dreidimensionalen Einschlüssen ohne Gasinklusionen, bei dem in der Aufsicht keine Klebenähte sichtbar sind.

### Beispiel 3

### Herstellung eines Vebundes aus einer Platte aus Polymethylmethacrylat (A) und einer Platte aus Bisphenol-A-Polycarbonat (B)

Eine Platte aus Polymethylmethacrylat (A) (PLEXIGLAS ® XT 20070: Molekulargewicht M_{W} ca. 155 000 Dalton) und eine Platte aus Polycarbonat (B) (MAKROLON ® 283: Molekulargewicht M_{W} ca. 30 000 Dalton) mit den Abmessungen 340 x 390 x 8 mm (Breite x Länge x Höhe) werden an ihrer Klebeseite auf eine Oberflächentemperatur von 175 Grad C für Platte A und 195 Grad C für Platte B erwärmt, mit gegenüberliegenden, noch getrennten Klebeseiten vor den Walzen angeordnet und mit einer Vorschubgeschwindigkeit von 50 mm/s zwischen den Walzen eingezogen, wobei die Walzen mit einer Kraft von 100 N zusammengepreßt werden.
Es resultiert ein Verbund aus A und B ohne Gasinklusionen, bei dem in der Aufsicht keine Klebenähte erkennbar sind.

### Beispiel 4

### Herstellung eines Verbundes aus Bisphenol-A-Polycarbonat-Platten

Zwei Platten aus Polycarbonat (MAKROLON ® 283: Molekulargewicht M_{W} 30.000 Dalton) mit den Abmessungen 390 x 340 x 8 mm (Länge x Breite x Höhe) werden an ihrer Klebeseite auf eine Oberflächentemperatur von 195 Grad C erwärmt, mit gegenüberliegenden, noch getrennten Klebeseiten vor den Walzen angeordnet und mit einer Vorschubgeschwindigkeit von 50 mm/s zwischen den Walzen eingezogen, wobei die Walzen mit einer Kraft von 100 N zusammengepreßt werden.
Es resultiert ein Verbund ohne Gasinklusionen, bei dem in der Aufsicht keine Klebenähte erkennbar sind.

## Patentansprüche

1. Verfahren zur Herstellung von flächigen Verbunden (Fig. 1: 5) aus Kunststoffteilen durch thermisches Verkleben von zwei einseitig an ihren Oberflächen (1a, 1a') erwärmten Kunststoffteilen (1, 1'), bestehend aus den Kunststoffen A und B,
dadurch gekennzeichnet,
daß die Oberflächen (1a, 1a') an der Klebeseite auf Oberflächentemperaturen vorerwärmt werden, die 10 bis 100 K oberhalb der Vicat-Erweichungstemperaturen VET (nach DIN ISO 306) der jeweiligen Kunststoffe A und B liegen, mit der Maßgabe, daß die Kunststoffteile (1, 1') während der Vorwärmphase ihre ursprüngliche Form beibehalten und zwischen einem Walzenpaar (2, 3), bei dem mindestens eine Walze (3), mit der die Preßkraft (4) ausgeübt wird, beweglich gelagert ist, mit einer Vorschubgeschwindigkeit zwischen 5 und 200 mm/s und mit einer auf die Walze (3) wirkende Preßkraft zwischen 10 und 500 N verpreßt werden.

2. Verfahren gemäß Anspruch 1, dadurch gekennzeichnet, daß Kunststoff A ein Polymerisat des Methylmethacrylats ist und Kunststoff B ausgewählt ist aus der Gruppe Polycarbonate, Polyester, Polyether, Polyamide oder deren Mischpolymerisate.

3. Verfahren gemäß Ansprüch 1, dadurch gekennzeichnet, daß die Kunststoffe A und B identisch sind und ausgewählt sind aus der Gruppe Polycarbonate, Polyether, Polyamide oder deren Mischpolymerisate.

4. Verfahren gemäß den Ansprüchen 1 bis 3, dadurch gekennzeichnet, daß die Kunststoffteile (1, 1') Platten oder Folien mit Dicken zwischen 0,5 und 100 mm, vorzugsweise zwischen 1 und 50 mm sind.

5. Verfahren gemäß den Ansprüchen 1 bis 4, dadurch gekennzeichnet, daß zwischen die zu verklebenden Kunststoffteile (1, 1') flächige oder längliche Gegenstände (Fig. 3: 8) mit Dicken, die maximal 50 %, vorzugsweise maximal 25 % der Dicke der Kunststoffteile (1, 1') betragen, eingesetzt werden, wobei die flächigen oder länglichen Gegenstände (8) maximal 90 % der Klebeflächen (1a, 1a') bedecken dürfen.

6. Verfahren gemäß den Ansprüchen 1 bis 4, dadurch gekennzeichnet, daß die Kunststoffteile (1, 1') an ihrer Klebefläche Gravuren oder Einprägungen (Fig. 2: 6, 6') von mindestens 0,2 mm, vorzugsweise von mindestens 1 mm Tiefe aufweisen, wobei die Kunststoffteile (1, 1') solchermaßen verpreßt werden, daß Verbunde (5) mit dreidimensionalen Einschlüssen (7) von definierter Gestalt entstehen.

7. Verfahren gemäß den Ansprüchen 1 bis 5, dadurch gekennzeichnet, daß die Differenzen zwischen den Oberflächentemperaturen der Klebeseiten (1a, 1a') und den Kerntemperaturen der Kunststoffteile (1, 1') mindestens 20 K, vorzugsweise mindestens 30 K betragen.

8. Verfahren gemäß den Ansprüchen 1 bis 6, dadurch gekennzeichnet, daß die Kerntemperaturen der Kunststoffteile (1, 1') mindestens 10 K unterhalb der Vicat-Erweichungstemperaturen VET (nach DIN ISO 306) der Kunststoffe A und B liegen.

9. Verfahren gemäß den Ansprüchen 4 bis 7, dadurch gekennzeichnet, daß die Platten oder Folien (1, 1') Breiten zwischen 0,1 und 2 m sowie zumindestens im Falle der Platten Längen zwischen 0,1 und 5 m aufweisen.

10. Verfahren gemäß den Ansprüchen 5 bis 8, dadurch gekennzeichnet, daß als flächige Gegenstände (8) Folien aus thermoplastischen Elastomeren zwischen den zu verklebenden Kunststoffteilen 1, 1') eingelagert werden.

11. Verfahren gemäß den Ansprüchen 5 bis 8, dadurch gekennzeichnet, daß als längliche Gegenstände (8) Drähte, Stahlspiralen oder Fäden, bevorzugt Kunststoff-Fäden mit hoher Elastizität und hohem Modul, zwischen den zu verklebenden Kunststoffteilen (1, 1') eingelagert werden.

## Claims

1. A process for the production of laminar composites (Fig. 1 5) of plastic parts by thermal adhesion of two plastic parts (1, 1'), heated on their surfaces (1a, 1a') on one side, comprising plastics A and B, characterised in that the surfaces (1a, 1a') on the adhesion side are pre-heated to surface temperatures which are 10 to 100 K above the Vicat softening temmperatures VET (according to DIN ISO 306) of the respective plastics A and B with the proviso that the plastic parts (1, 1') maintain their original form during the pre-heating phase and are pressed, at a feeding speed of between 5 and 200 mm/s and with a force which is exerted on the roller (3) of between 10 and 500 N, through a pair of rollers (2, 3) wherein at least one roller (3), via which the pressing force (4) is exerted, is mounted so as to be moveable.

2. A process according to claim 1, characterised in that plastic A is a polymerisate of methyl methacrylate and plastic B is selected from the group of polycarbonates, polyesters, polyethers, polyamides or the mix polymerisates thereof.

3. A process according to claim 1, characterised in that the plastics A and B are identical and are selected from the group of polycarbonates, polyethers, polyamides or the mix polymerisates thereof.

4. A process according to claims 1 to 3, characterised in that the plastic parts (1, 1') are plates or foils with thicknesses of between 0.5 and 100 mm, preferably between 1 and 50 mm.

5. A process according to claims 1 to 4, characterised in that laminar or elongated objects (Fig. 3 8) are inserted between the plastic parts (1, 1') which are to be adhered, having thicknesses of a maximum of 50%, preferably a maximum of 25% of the thickness of the plastic parts (1, 1'), wherein the laminar or elongated objects (8) may cover a maximum of 90% of the adhesion surface (1a, 1a').

6. A process according to claims 1 to 4, characterised in that the plastic parts (1, 1') have engravings or imprints (Fig. 2: 6, 6') on their adhesion surfaces, with a depth of at least 0.2 mm, preferably at least 1 mm, wherein the plastic parts (1, 1') are pressed together so that composites (5) with three-dimensional occlusions (7) of defined shape result.

7. A process according to claims 1 to 5, characterised in that the differences between the surface temperatures of the adhesion sides (1a, 1a') and the core temperatures of the plastic parts (1, 1') is at least 20 K, preferably at least 30 K.

8. A process according to claims 1 to 6, characterised in that the core temperatures of the plastic parts (1, 1') is at least 10 K less than the Vicat softening temperatures VET (according to DIN ISO 306) of the plastics A and B.

9. A process according to claims 4 to 7, characterised in that the plates or foils (1, 1') have widths of between 0.1 and 2 m and, at least in the case of the plates, have lengths of between 0.1 and 5 m.

10. A process according to claims 5 to 8, characterised in that as laminar objects (8), foils of thermoplastic elastomers are inlaid between the plastic parts (1, 1') which are to be adhered.

11. A process according to claims 5 to 8, characterised in that as elongated objects (8), wires, steel spirals or filaments, preferably plastic filaments with high elasticity and high modulus, are inlaid between the plastic parts (1, 1') which are to be adhered.

## Revendications

1. Procédé de fabrication d'assemblages bidimensionnels (5) constitués de pièces de matière plastique par collage thermique de deux pièces de matière plastique (1, 1') chauffées par un côté sur leur surface (1a, 1a'), constituées des matières plastiques A et B,
caractérisé en ce que
les surfaces (1a, 1a') sont préchauffées sur leur côté à coller à des températures de surface qui se situent entre 10 à 100 K au-dessus de la température de ramollissement de Vicat TRV (selon la norme DIN ISO 306) des matières plastiques A et B considérées, sous réserve que les pièces de matière plastique (1, 1') conservent au cours de la phase de préchauffage leur forme d'origine, et sont pressées entre une paire de cylindres (2, 3), dont au moins un cylindre (3) exerce la force de pressage (4) de façon mobile, avec une vitesse d'avancée comprise entre 5 et 200 mm/seconde et avec une force de pression agissant sur le cylindre 3 comprise entre 10 et 500 N.

2. Procédé selon la revendication 1,
caractérisé en ce que
la matière plastique A est un polymère de méthacrylate de méthyle et la matière plastique B est choisie dans le groupe des polycarbonates, polyesters, polyéthers, polyamides ou leurs polymères mixtes.

3. Procédé selon la revendication 1,
caractérisé en ce que
les matières plastiques A et B sont identiques et sont choisies dans le groupe des polycarbonates, polyéthers, polyamides ou leurs polymères mixtes.

4. Procédé selon les revendications 1 à 3,
caractérisé en ce que
les pièces en matière plastique (1, 1') sont des plaques ou des feuilles ayant des épaisseurs comprises entre 0,5 et 100 mm, de préférence entre 1 et 50 mm.

5. Procédé selon les revendications 1 à 4,
caractérisé en ce qu'
on insère entre les pièces de matière plastique à coller (1, 1') des objets bidimensionnels ou longitudinaux (8) ayant des épaisseurs qui s'élèvent au maximum à 50 %, de préférence au maximum à 25 %, de l'épaisseur des pièces de matière plastique (1, 1'), les objets bidimensionnels ou longitudinaux (8) devant recouvrir au maximum 90 % des surfaces à coller (1a, 1a').

6. Procédé selon les revendications 1 à 4,
caractérisé en ce que
les pièces de matière plastique (1, 1') présentent sur leur surface à coller des gravures ou des impressions (6, 6') d'au moins 0,2 mm, de préférence d'au moins 1 mm d'épaisseur, les pièces de matière plastique (1, 1') étant pressées de manière telle que l'on obtienne des assemblages (5) avec des inclusions tridimensionnelles (7) de forme définie.

7. Procédé selon les revendications 1 à 5,
caractérisé en ce que
la différence entre les températures superficielles des faces à coller (1a, 1a') et les températures de noyau des pièces de matière plastique (1, 1') s'élève à au moins 20 K, de préférence à au moins 30 K.

8. Procédé selon les revendications 1 à 6,
caractérisé en ce que
les températures de noyau des pièces de matière plastique (1, 1') se situent au moins à 10 K en dessous de la température de ramollissement de Vicat TRV (selon la norme DIN ISO 306) des matières plastiques A et B.

9. Procédé selon les revendications 4 à 7,
caractérisé en ce que
les plaques ou feuilles (1, 1') présentent des largeurs comprises entre 0,1 et 2 mètres, ainsi qu'au moins dans le cas des plaques des longueurs comprises entre 0,1 et 5 mètres.

10. Procédé selon les revendications 5 à 8,
caractérisé en ce qu'
on insère comme objet bidimensionnel (8) des feuilles en élastomères thermoplastiques entre les pièces de matières plastique à coller (1, 1').

11. Procédé selon les revendications 5 à 8,
caractérisé en ce qu'
on insère comme objets longitudinaux (8) des fils métalliques, des spirales d'acier ou des fils, de préférence des fils de matière plastique ayant une grande élasticité et un haut module, entre les pièces de matière plastique à coller (1, 1').
